# EUROPÄISCHE PATENTSCHRIFT

(11) **EP 2 149 422 B1**
(45) Veröffentlichungstag und Bekanntmachung des Hinweises auf die Patenterteilung: **14.10.2015**
(21) Anmeldenummer: 09008714.9
(22) Anmeldetag: 03.07.2009
(51) Int. Cl.: B23P 21/00, B23Q 7/02, B25J 9/00, B62D 65/02

(54) **Fertigungssystem**
Manufacturing system
Système de fabrication

(30) Priorität: 02.08.2008 DE 102008036218
(43) Veröffentlichungstag der Anmeldung: 03.02.2010
(73) Patentinhaber: Bayerische Motoren Werke Aktiengesellschaft, 80809 München (DE)
(72) Erfinder: Fischer, Alexander, 85447 Maria Thalheim (DE); Näb, Robert, 85356 Freising (DE)

(56) Entgegenhaltungen:
- EP-A2- 1 873 045
- WO-A1-2006/082061
- WO-A1-2008/062033
- DE-U1-202006 005 835

## Beschreibung

Die Erfindung bezieht sich auf ein Fertigungssystem für typenmäßig unterschiedliche Bau- und insbesondere Karosseriebauteile, nach dem Oberbegriff des Patentanspruchs 1.

Bei dem aus der WO 2006/0820061 bekannten Fertigungssystem dieser Art sind auf einem Drehtisch in Umfangsrichtung gleichförmig verteilt mehrere, jeweils für einem bestimmten Bauteiltyp ausgestattete Aufnahmewerkzeuge angeordnet, die schrittweise zwischen einer Belade-, einer oder mehreren Bauteil-Bearbeitungs- und einer Werkzeug-Wechselstation verfahrbar sind. Dabei kann ein Aufnahmewerkzeug an der Beladestation jedoch erst mit einem Bauteil belegt werden, wenn zuvor der Bearbeitungsvorgang eines typengleichen Bauteils auf dem Aufnahmewerkzeug an der Bearbeitungsstation abgeschlossen und dieses entladen und zur nächsten Station, nämlich regelmäßig zurück zur Beladestation, befördert worden ist, was zu einer entsprechenden Verzögerung im Fertigungstakt und einer demzufolge verringerten Produktionsrate führt. Hinzu kommt, dass bei einem Modellwechsel mit einem Werkzeugaustausch an der Werkzeugwechselstation ebenfalls wertvolle Prozesszeit verloren geht, weil das für den neuen Bauteiltyp eingeschleuste Aufnahmewerkzeug gleichfalls erst zur Beladestation verfahren und dort der Beladevorgang abgewartet werden muss, bevor das Aufnahmewerkzeug zur Bearbeitungsstation weiterbewegt und dann mit der Bearbeitung des neuen Bauteiltyps begonnen werden kann.

Bei einem aus der DE 20 2006 005 005835 U1 bekannten, typenvariablen Fertigungssystem mit einer Umlaufbahn in Form eines Drehtisches mit vier Werkzeugpositionen wird für jeden Bauteiltyp eine entsprechend große Anzahl von typengleichen Aufnahmewerkzeugen und somit ein hoher Investitionsaufwand für den insgesamt erforderlichen Werkzeugbestand benötigt. Zudem wird bei jedem Fertigungstakt jeweils ein Aufnahmewerkzeug zeitlich nacheinander dem Drehtisch entnommen und entladen und das gleiche oder ein typenmäßig anderes Aufnahmewerkzeug im neu beladenen Zustand auf den Drehtisch zurücktransportiert, so dass sich die hierfür benötigten Werkzeugwechselzeiten und die Bauteilbe- bzw. -entladezeit zu einer entsprechend verlängerten Zykluszeit aufsummieren.

Die EP 1 873 045 A2 beschreibt ein typenvariables Fertigungssystem mit einer wechselweisen Bauteilbearbeitung an zwei nebeneinander positionierten, mit typenspezifischen Aufnahmewerkzeugen bestückten Drehtischen, an denen jeweils in Umfangsrichtung verteilt eine Bauteilbelade- und eine Bauteilentladestation sowie eine Werkzeugwechselstation und eine Bauteilbearbeitung zwischen Be- und Entladestation vorgesehen sind. Auch diese Anlage erfordert einen hohen Investitionsaufwand und bei einem Typenwechsel muss zunächst der Werkzeugaustausch an der Werkzeugwechselstation auf Kosten wertvoller Prozesszeit abgewartet werden, bevor mit dem Beladen des neu eingeschleusten Werkzeugtyps begonnen werden kann.

Aufgabe der Erfindung ist es, ein Fertigungssystem der eingangs genannten Art zu schaffen, welches mit kurzen Taktzeiten, einem geringen Investitionsaufwand und einem niedrigen Raumbedarf eine hochgradig typenvariable Bauteilbearbeitung ermöglicht.

Diese Aufgabe wird erfindungsgemäß durch das im Patentanspruch 1 gekennzeichnete Fertigungssystem gelöst. Vorteilhafte Ausführungsformen sind Gegenstand der abhängigen Ansprüche.

Erfindungsgemäß wird für jeden Bauteiltyp lediglich ein Paar typengleicher Aufnahmewerkzeuge benötigt, so dass der Investitionsaufwand und der Platzbedarf für den insgesamt erforderlichen Werkzeugbestand selbst bei einer großen Typenvielfalt äußerst gering gehalten wird, und dennoch wird sichergestellt, dass sich zeitgleich zu der Bauteilbearbeitung an einem der Aufnahmewerkzeuge in der Bearbeitungsstation ein typengleiches Aufnahmewerkzeug an der Beladestation befindet und dort bauteilbestückt werden kann, was zu einer deutlichen Erhöhung des Fertigungstaktes und somit der Produktionsrate führt, mit dem weiteren wesentlichen Aspekt, dass der Fertigungstakt auch bei einem Typenwechsel ungestört weiterläuft, weil zusätzlich zu dem gerade benutzten Werkzeugpaar zumindest ein weiteres, typenmäßig unterschiedliches Werkzeugpaar mit einem beladenen und einem unbelegten Aufnahmewerkzeug auf der Umlaufbahn in Bereitschaft mitgeführt wird, auf welches bei einem Typenwechsel nahtlos umgeschaltet werden kann, sei es, dass sich dieses Werkzeugpaar während der vorausgehenden Fertigungstakte ohnehin schon auf der Umlaufbahn befand, oder dass es bei einem bevorstehenden Typenwechsel - wiederum ohne Unterbrechung der laufenden Bauteilbearbeitung - gegen das nachfolgend benötigte Werkzeugpaar an der Werkzeugwechselstation ausgetauscht wurde.

In besonders bevorzugter Ausgestaltung der Erfindung sind gemäß Anspruch 2 mindestens zwei gleichzeitig aktivierbare Wechselstationen an der Umlaufbahn angeordnet, an denen ein bauteilbeladenes und ein typengleiches, unbeladenes Aufnahmewerkzeug zeitgleich positionierbar und gegen ein bauteilbeladenes und ein unbeladenes Aufnahmewerkzeug eines anderen Werkzeugpaares austauschbar sind, so dass in einem einzigen Wechselvorgang ein kompletter Werkzeugsatz für einen nachfolgenden Bauteiltyp im Austausch zu dem in Bereitschaft mitgeführten Werkzeugsatz in die Umlaufbahn eingeschleust und im unmittelbar anschließenden Fertigungstakt mit der Bearbeitung des eingeschleusten Bauteiltyps begonnen werden kann.

Dabei wird ein baulich und steuerungsmäßig wesentlich vereinfachter Werkzeugtransport nach Anspruch 3 vorzugsweise dadurch erreicht, dass mindestens zwei typenmäßig unterschiedliche Werkzeugpaare auf der Umlaufbahn mit konstantem gegenseitigen Abstand verfahrbar und sowohl die eine Wechselstation von der Beladestation als auch die andere Wechselstation von der Bearbeitungsstation in Richtung der Umlaufbahn jeweils gleich weit wie die Werkzeugpaare voneinander beabstandet sind, und in weiterer baulicher Vereinfachung sind die Aufnahmewerkzeuge nach Anspruch 4 zweckmäßigerweise auf einem rotierend oder reversibel zwischen den einzelnen Stationen angetriebenen Drehtisch austauschbar angeordnet, derart, dass die typengleichen Aufnahmewerkzeuge jedes Werkzeugpaares, die beiden Wechselstationen zueinander sowie die Belade- und die Bearbeitungsstation bezüglich der Drehtischachse jeweils einander diametral gegenüberliegend positioniert sind. Um in diesem Fall die Abmessungen des Drehtisches unter Beibehalt der vollen Funktionalität des Fertigungssystems möglichst gering zu halten, ist der Drehtisch nach Anspruch 5 vorzugsweise mit lediglich zwei auf zueinander rechtwinklig versetzten Drehtisch-Diagonalen angeordneten Werkzeugpaaren belegt und die Wechselstationen sind zu der Belade- und der Bearbeitungsstation ebenfalls um 90° winkelversetzt angeordnet.

Ein weiterer wesentlicher Aspekt der Erfindung betrifft die Speicherung der überzähligen Aufnahmewerkzeuge getrennt von der Umlaufbahn. Zu diesem Zweck sind, wie nach Anspruch 6 wiederum aus Gründen eines raschen Typenwechsels bevorzugt, den beiden Wechselstationen jeweils ein eigener Werkzeugspeicher zugeordnet und von jedem der gespeicherten Werkzeugpaare ist das eine Aufnahmewerkzeug in dem einen und das typengleich andere in dem anderen Werkzeugspeicher bevorratet, wobei die Werkzeugspeicher nach Anspruch 7 im Hinblick auf eine systemreine Bauweise - ebenso wie der Drehtisch für die Werkzeugumlaufbahn - jeweils als Drehtische mit in Umfangsrichtung verteilten Speicherplätzen ausgebildet sein können. Zur Übergabe der Aufnahmewerkzeuge zwischen Werkzeugspeicher und Umlaufbahn ist dabei vorzugsweise ein einfacher Linearförderer nach Anspruch 8 oder alternativ unabhängig von der Gestaltung der Werkzeugspeicher ein Transportroboter nach Anspruch 9 vorgesehen.

Die Erfindung wird nunmehr anhand zweier bevorzugter Ausführungsbeispiele in Verbindung mit den Zeichnungen näher erläutert. Es zeigen in stark schematisierter Darstellung:
- **Fig. 1**: ein typenvariables Fertigungssystem nach der Erfindung in der Aufsicht; und
- **Fig. 2**: eine der Fig. 1 entsprechende Darstellung eines erfindungsgemäßen Fertigungssystems mit einer alternativen Werkzeugwechsel- und Speicheranordnung.

Das in den Fign. dargestellte Fertigungssystem ist für fünf unterschiedliche Bauteiltypen konzipiert, ist jedoch bei einer entsprechenden Erweiterung des Werkzeugbestands für eine praktisch beliebig große Typenvielfalt verwendbar.

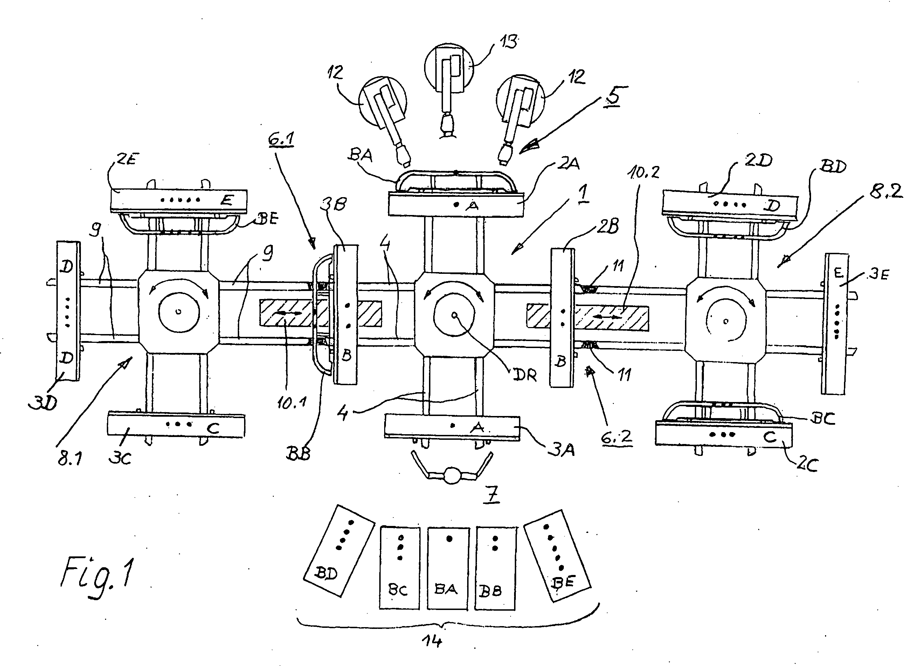

Gemäß Fig. 1 enthält das Fertigungssystem einen zentralen Drehtisch 1 mit vier um 90° zueinander versetzten Werkzeugpositionen, die mit insgesamt zwei Paaren A und B von untereinander typengleichen, von Paar zu Paar jedoch typenunterschiedlichen Aufnahmewerkzeugen 2A, 3A bzw. 2B, 3B derart belegt sind, dass sich die Aufnahmewerkzeuge 2, 3 jedes Werkzeugpaares A oder B bezüglich der Drehtischachse DR einander diametral gegenüberliegen. Auf dem Drehtisch 1 sind die Aufnahmewerkzeuge 2, 3 auf radial verlaufenden Schienenstücken 4 gelagert und an diesen lösbar fixiert.

An der Umlaufbahn des Drehtisches 1 befinden sich im Winkelabstand der Aufnahmewerkzeuge 2, 3, also wiederum mit einem Winkelversatz von 90°, gleichförmig verteilt vier ortsfeste Arbeitsstationen, nämlich eine Bearbeitungs- und Entnahmestation 5, eine erste Werkzeugwechselstation 6.1, eine der Bearbeitungsstation 5 diametral gegenüberliegende Beladestation 7 und eine diametral zur ersten angeordnete, zweite Werkzeugwechselstation 6.2. Wenn sich daher das eine Aufnahmewerkzeug 2 oder 3 eines Werkzeugpaares A oder B an der Bearbeitungsstation 5 befindet, ist das typengleich andere Aufnahmewerkzeug des gleichen Werkzeugpaares an der Beladestation 7 angeordnet, während gleichzeitig das zweite Werkzeugpaar B oder A mit dem einen Aufnahmewerkzeug 2 oder 3 an der einen und mit dem typengleich anderen Aufnahmewerkzeug an der anderen Werkzeugwechselstation 6.1 bzw.6.2 positioniert ist.

Den Wechselstationen 6.1 und 6.2 sind jeweils Werkzeugspeicher 8.1 und 8.2, wiederum in Form von Drehtischen, für die überzähligen, nicht auf dem zentralen Drehtisch 1 befindlichen Werkzeugpaare zugeordnet, bei dem gezeigten Ausführungsbeispiel also für die drei restlichen Werkzeugpaare des Typs C, D und E. Von jedem gespeicherten Werkzeugpaar C, D oder E ist das eine Aufnahmewerkzeug 2 oder 3 an dem einen und das typengleich andere Aufnahmewerkzeug 3 oder 2 an dem anderen Speichertisch 8.1 bzw. 8.2 ebenfalls wieder auf radial verlaufenden Schienenstücken 9 gelagert und an diesen lösbar fixiert. Ein überschüssiger (vierter) Speicherplatz jedes Speichertisches 8 bleibt zum Zwecke des Werkzeugaustausches unbelegt. Die Werkzeugübergabe vom zentralen Drehtisch 1 an den jeweiligen Speichertisch 8, und umgekehrt, wird mit Hilfe eines richtungsumkehrbaren Linearförderers 10 unter fluchtender Ausrichtung der Schienenstücke 4, 9 bewirkt, wobei die Lücke zwischen diesen durch ortsfeste Zwischenstücke 11 überbrückt wird.

Vor Inbetriebnahme des Fertigungssystems wird von jedem Werkzeugpaar A bis E das eine Aufnahmewerkzeug 2 oder 3 mit einem entsprechend typengleichen Bauteil (oder Bauteilstücken) BA.....BE beladen, während das andere Aufnahmewerkzeug unbeladen bleibt. Es sei angenommen, dass der Fertigungsprozess zunächst mit dem Bauteiltyp BA beginnt. Zu diesem Zweck wird das beladene Aufnahmewerkzeug des Werkzeugpaares A auf dem zentralen Drehtisch 1 zur Bearbeitungsstation 5 verfahren und dort, etwa mit Hilfe von Schweißrobotern 12, bearbeitet und anschließend dem Aufnahmewerkzeug z. B. durch einen Transportroboter 13 entnommen, während sich zeitgleich zu dem Bearbeitungs- und Entnahmevorgang an der Bearbeitungsstation 5 das unbeladene Aufnahmewerkzeug des gleichen Werkzeugpaares A an der gegenüber liegenden Beladestation 7 befindet, wo es mit einem typenspezifisch gleichen Bauteil BA (oder Bauteilstücken) aus einem insgesamt mit 14 bezeichneten Bauteillager bestückt wird. Daraufhin wird der zentrale Drehtisch 1 um 180° gedreht, so dass das nunmehr mit dem Bauteil BA beladene Aufnahmewerkzeug von der Belade- zur Bearbeitungsstation 5 und das typengleich andere, aber jetzt unbeladene Aufnahmewerkzeug zur Beladestation 7 verfahren und dort - wiederum gleichzeitig zu dem Arbeitsvorgang an dem typengleich beladenen Aufnahmewerkzeug an der Bearbeitungsstation 5 - mit dem nächsten, typenspezifischen Bauteil BA bestückt wird. Dieser Fertigungstakt wiederholt sich, bis das Fertigungssystem auf einen anderen Bauteiltyp, also beispielsweise zunächst auf den Bauteiltyp B, umgeschaltet werden soll.

In diesem Fall wurde das nunmehr benötigte Werkzeugpaar B im vorhergehenden Fertigungsprozess ohnehin schon zusätzlich zu dem aktiven Werkzeugpaar A auf dem zentralen Drehtisch 1 in Bereitschaft mitgeführt, so dass der Drehtisch 1 nur um 90° weitergeschaltet werden muss, um das mit dem Bauteil BB beladene Aufnahmewerkzeug des Werkzeugpaares B an die Bearbeitungsstation 7 und das typengleich andere, aber unbeladene Aufnahmewerkzeug an die Beladestation 7 zu verfahren, wo es - wiederum gleichzeitig zu der Bauteilbearbeitung und -entnahme an dem gegenüberliegenden Aufnahmewerkzeug - mit dem nächsten, typengleichen Bauteil BB beladen wird. Auf diese Weise wird ein verzögerungsfreier Typenwechsel ohne Unterbrechung des Fertigungstaktes erreicht. Anschließend wird der Fertigungsprozess mit dem neuen Bauteiltyp B in gleicher Weise wie zuvor mit dem Bauteiltyp A, d. h. unter taktweiser Drehung des zentralen Drehtisches 1 um jeweils 180°, fortgesetzt.

Soll der Fertigungsprozess hingegen auf ein an den Speichertischen 8 gepuffertes Werkzeugpaar C, D oder E umgeschaltet werden, so befinden sich die beladenen und unbeladenen Aufnahmewerkzeuge 2, 3 des auf dem zentralen Drehtisch 1 in Bereitschaft mitgeführten Werkzeugpaares zur gleichen Zeit an den Wechselstationen 6.1 und 6,2, in welcher die Bearbeitungs- und Beladevorgänge an dem gerade aktiven Werkzeugpaar in den Stationen 5 und 7 ablaufen. Die Aufnahmewerkzeuge an den Wechselstationen 6.1 und 6.2 können daher noch im gleichen Fertigungstakt mit Hilfe der Linearförderer 10 nach Lösen ihrer schienenseitigen Fixierungen vom zentralen Drehtisch 1 gleichzeitig und zueinander gegenläufig auf die freien Speicherplätze der Speichertische 8.1 und 8.2 überführt werden, woraufhin die Aufnahmewerkzeuge des nachfolgend benötigten Werkzeugpaares C, D oder E auf den Speichertischen 8.1 und 8.2 an die Wechselstationen 6.1 und 6.1 gedreht und dort, wiederum mit Hilfe der Linearförderer 10, an die nunmehr unbesetzten Werkzeugpositionen des zentralen Drehtisches 1 übergeben werden. Somit erfolgt der Werkzeugaustausch auch in diesem Fall wieder taktgleich zu der Bauteilbearbeitung und -beladung an den Aufnahmewerkzeugen in den Stationen 5 und 7. Anschließend wird der Fertigungsprozess mit dem neuen Werkzeugpaar C, D oder E in gleicher Weise verzögerungsfrei wie bei dem oben geschilderten Typenwechsel, also unter Drehung des Drehtisches 1 zunächst um 90° und dann nach jedem Fertigungstakt um 180°, fortgesetzt.

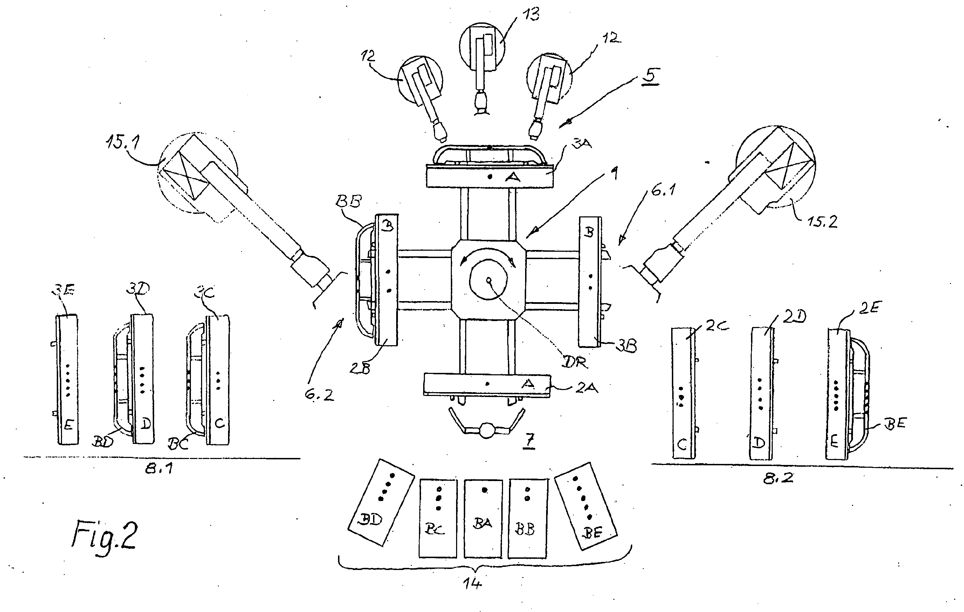

Das in Fig. 2 dargestellte Fertigungssystem stimmt in Bau- und Funktionsweise weitgehend mit dem zuvor beschriebenen Ausführungsbeispiel überein. Einander entsprechende Komponenten sind daher durch das gleiche Bezugszeichen gekennzeichnet. Der Hauptunterschied besteht in der andersartigen Werkzeugspeicherung und -übergabe an den Wechselstationen 6.1 und 6.2, denen an Stelle von Speichertischen jeweils stationäre Werkzeugspeicher 8.1 und 8.2 zugeordnet sind, in denen die beladenen und unbeladenen Aufnahmewerkzeuge 2, 3 der überzähligen (in der augenblicklichen Fertigungsphase nicht auf dem Drehtisch 1 befindlichen) Werkzeugpaare C, D und E, wiederum aufgeteilt auf die beiden Werkzeugspeicher 8.1 und 8.2, gepuffert werden. Der Werkzeugaustausch an den Wechselstationen 6.1, 6.2 erfolgt mit Hilfe von Transportrobotern 15.1 und 15.2, die das beladene und taktgleich auch das unbeladene Aufnahmewerkzeug 2, 3 des in Bereitschaft auf dem Drehtisch 1 mitgeführten Werkzeugpaares von der Wechselstation 6.1 bzw. 6.2 zu dem zugeordneten Speicherplatz 8.1 bzw. 8.2 transportieren und die beiden Aufnahmewerkzeuge 2, 3 des nachfolgend benötigten Werkzeugtyps vom jeweiligen Speicherplatz 8.1, 8.2 an die Wechselstationen 6.1 bzw. 6.2 überführen und dort auf den freigewordenen Drehtischpositionen absetzen. Im Übrigen ist die Bau- und Funktionsweise des Fertigungssystems gem. Fig. 2 die gleiche wie bei dem eingangs beschriebenen Ausführungsbeispiel.

Im Rahmen der Erfindung sind zahlreiche Abwandlungen möglich. So können nicht nur fünf, sondern bei ensprechender Auslegung des Werkzeugbestands und der Werkzeugspeicher 8.1 und 8.2 praktisch beliebig viele Bauteiltypen im freien Mix verarbeitet werden. Außerdem müssen die Aufnahmewerkzeuge nicht unbedingt gleichförmig verteilt auf einem zentralen Drehtisch positioniert sein, sondern können gewünschtenfalls auch unabhängig voneinander auf einer geschlossenen Umlaufbahn zu den einzelnen Arbeitsstationen befördert werden, und auch deren gegenseitige räumliche Zuordnung ist nicht auf die in den Fign. gezeigte Anordnung beschränkt, solange eine taktgleiche Bearbeitung und Beladung an typengleichen Aufnahmewerkzeugen und ein verzögerungsfreier Wechsel des Bauteiltyps mit der Möglichkeit eines Werkzeugaustausches zwischen Umlaufbahn und Werkzeugspeicher ohne Unterbrechung des Bearbeitungs- und Beladetaktes sichergestellt ist.

## Patentansprüche

1. Fertigungssystem für typenmäßig unterschiedliche Bauteile, insbesondere Karosseriebauteile, mit auswechselbaren, jeweils typenspezifischen Aufnahmewerkzeugen, die auf einer Umlaufbahn zwischen einer Beladestation und einer Bearbeitungsstation für unterschiedliche Bauteiltypen sowie einer Werkzeugwechselstation verfahrbar sind, **dadurch gekennzeichnet, dass** die auf der Umlaufbahn (1) befindlichen Aufnahmewerkzeuge (2, 3) paarweise typengleich (A...E), von Paar zu Paar jedoch typenunterschiedlich ausgebildet sind und dass das eine Aufnahmewerkzeug (2 oder 3) jeweils eines Werkzeugpaares an der Beladestation (7) und das typengleich andere (3 oder 2) zeitgleich an der Bearbeitungsstation (5) positionierbar ist, während gleichzeitig zumindest ein Aufnahmewerkzeug eines weiteren Werkzeugpaares an der Wechselstation (6) gegen ein typenunterschiedliches Aufnahmewerkzeug eines anderen Werkzeugpaares austauschbar ist.

2. Fertigungssystem nach Anspruch 1, **dadurch gekennzeichnet, dass** an der Umlaufbahn (1) mindestens zwei gleichzeitig aktivierbare Wechselstationen (6.1, 6.2) angeordnet sind, an denen ein bauteilbeladenes und ein typengleiches, unbeladenes Aufnahmewerkzeug (2, 3) zeitgleich positionierbar und gegen ein bauteilbeladenes und ein unbeladenes Aufnahmewerkzeug eines anderen Werkzeugpaares austauschbar sind.

3. Fertigungssystem nach Anspruch 2, **dadurch gekennzeichnet, dass** mindestens zwei typenmäßig unterschiedliche Werkzeugpaare (A, B) auf der Umlaufbahn mit konstantem gegenseitigen Abstand verfahrbar und sowohl die eine Wechselstation (6.1) von der Beladestation (7) als auch die andere Wechselstation (6.2) von der Bearbeitungsstation (5) in Richtung der Umlaufbahn jeweils gleich weit wie die Werkzeugpaare (A, B) voneinander beabstandet sind.

4. Fertigungssystem nach Anspruch 2 oder 3, bei dem die Aufnahmewerkzeuge auf einem rotierend oder reversibel zwischen den einzelnen Stationen angetriebenen Drehtisch austauschbar angeordnet sind, **dadurch gekennzeichnet, dass**
die typengleichen Aufnahmewerkzeuge (2, 3) jedes Werkzeugpaares (A....E), die beiden Wechselstationen (6.1, 6.2) zueinander sowie die Betade- und die Bearbeitungsstation (7, 5) bezüglich der Drehtischachse (DR) jeweils einander diametral gegenüberliegend positioniert sind.

5. Fertigungssystem nach Anspruch 4, **dadurch gekennzeichnet, dass** der Drehtisch (1) mit zwei auf zueinander rechtwinklig versetzten Drehtisch-Diagonalen angeordneten Werkzeugpaaren (A, B) belegt ist und die Wechselstationen (6.1, 6.2) zu der Belade- und der Bearbeitungsstation (7, 5) ebenfalls um 90° winkelversetzt sind.

6. Fertigungssystem nach einem der Ansprüche 2 bis 5, **dadurch gekennzeichnet, dass**
den beiden Wechselstationen (6.1, 6.2) jeweils ein Werkzeugspeicher (8.1, 8.2) zugeordnet und von jedem der gespeicherten Werkzeugpaare (C, D, E) das eine Aufnahmewerkzeug (2 oder 3) in dem einen und das typengleich andere (3 oder 2) in dem anderen Werkzeugspeicher bevorratet ist.

7. Fertigungssystem nach Anspruch 6, **dadurch gekennzeichnet, dass** die Werkzeugspeicher (8.1, 8.2) jeweils als Drehtische mit in Umfangsrichtung verteilten Speicherplätzen ausgebildet sind.

8. Fertigungssystem nach Anspruch 6 oder 7, **dadurch gekennzeichnet, dass** zur Übergabe der Aufnahmewerkzeuge (2, 3) zwischen Werkzeugspeicher (8.1, 8.2) und Umlaufbahn ein Linearförderer (10) vorgesehen ist.

9. Fertigungssystem nach Anspruch 6 oder 7, **dadurch gekennzeichnet, dass** zur Übergabe der Aufnahmewerkzeuge (2, 3) zwischen Werkzeugspeicher (8.1, 8.2) und Umlaufbahn ein Transportroboter (15) vorgesehen ist.

## Claims

1. A system for producing various types of components, especially car body parts, comprising interchangeable tools for receiving specific types and movable along a circular path between a loading station, a station for processing various types of components and a tool-changing station,
**characterised in that**
the receiving tools (2, 3) on the circular path (1) are of the same type (A....E) in each pair but different types from one pair to another and one receiving tool (2 or 3) for each pair of tools can be positioned on a loading station (7) and the similar-type other tool (3 or 2) can be simultaneously positioned on a processing station (5), and at least one receiving tool for another pair of tools can be exchanged at a change station (6) for a different-type tool for receiving another pair of tools.

2. A system according to claim 1, **characterised in that**
at least two simultaneously activatable change stations (6.1, 6.2) are disposed on the circular path (1) and a receiving tool (2, 3) loaded with a component and a receiving tool of similar type but unloaded can be simultaneously positioned on the change stations and exchanged for a receiving tool loaded with a component and an unloaded receiving tool for another pair of tools.

3. A system according to claim 2, **characterised in that**
at least two pairs of tools (A, B) of different type can be moved on the circular path at a constant distance from one another and one change station (6.1) is at a distance from the loading station (7) and the other change station (6.1, 6.2) is at a distance from the processing station (5) in the direction of the circular track, both distances being equal to the spacing between the pairs of tools (A, B).

4. A production system according to claim 2 or claim 3, wherein the receiving tools are interchangeably disposed on a turntable rotating or reversibly driven between the individual stations, **characterised in that**
the same-type receiving tools (2, 3) of each pair of tools (A....E), the two change stations (6.1, 6.2) and the loading and the processing station (7, 5) are positioned diametrically opposite one another relative to the turntable axis (DR).

5. A system according to claim 4, **characterised in that**
the turntable (1) is loaded with two pairs of tools (A, B) disposed on turntable diagonals at right angles to one another and the change stations (6.1, 6.2) are offset, likewise by an angle of 90 , relative to the loading and the processing station (7, 5).

6. A system according to any of claims 2 to 5, **characterised in that**
the two change stations (6.1, 6.2) are each associated with a tool store (8.1, 8.2) and one receiving tool (2 or 3) for each stored pair of tools (C, D, E) is stored in one store and the similar type other receiving tool (2 or 3) is stored in the other tool store.

7. A system according to claim 6, **characterised in that**
the tool stores (8.1, 8.2) are each in the form of a turntable with storage places distributed in the peripheral direction.

8. A system according to claim 6 or claim 7, **characterised in that**
a linear conveyor (10) is provided for conveying the receiving tools (2, 3) between the tool stores (8.1, 8.2) and the circular path.

9. A system according to claim 6 or claim 7, **characterised in that**
a transport robot (15) is provided for transferring the receiving tools (2, 3) between the tool stores (8.1, 8.2) and the circular path.

## Revendications

1. Système de fabrication de composants de types différents, notamment de composants de carrosserie comportant des outils récepteurs échangeables, chaque fois spécifiques à un type, et qui se déplacent sur un chemin de circulation entre un poste de chargement et un poste d'usinage pour des types de composants différents ainsi qu'un poste de changement d'outils,
**caractérisé en ce que**
les outils récepteurs (2, 3) sur le chemin de circulation (1) sont constitués par des paires de même type (A...E) mais néanmoins de type différent d'une paire à l'autre et **en ce qu'**un outil récepteur (2 ou 3) de chaque paire d'outils est positionné dans le poste de chargement (7) et l'autre outil de même type (3 ou 2) est simultanément positionné dans le poste d'usinage (5) pendant qu'en même temps, au moins un outil récepteur d'une autre paire d'outils est échangé dans le poste d'échange (6) contre un outil récepteur de type différent d'une autre paire d'outils.

2. Système de fabrication selon la revendication 1,
**caractérisé en ce que**
sur le chemin de circulation (1), il y a au moins deux postes d'échange (6.1, 6.2) qui peuvent être activés simultanément et où on peut placer simultanément un outil récepteur (2, 3) chargé d'un composant et un outil récepteur de même type, non chargé, et qui peuvent être échangés contre un outil récepteur chargé d'un composant et un outil récepteur non chargé appartenant à une autre paire d'outils.

3. Système de fabrication selon la revendication 2,
**caractérisé en ce qu'**
au moins deux paires d'outils (A, B) de type différent se déplacent sur le chemin de circulation à distance constante et à la fois un poste d'échange (6.1) est distant du poste de chargement (7) et aussi l'autre poste d'échange (6.2) est distant du poste d'usinage (5) dans la direction du chemin de circulation chaque fois de la même distance que celle qui sépare les paires d'outils (A, B).

4. Système de fabrication selon la revendication 2 ou 3 selon lequel les outils récepteurs sont installés de manière échangeable sur une table rotative entraînée en rotation ou réversible entre les différents postes,
**caractérisé en ce que**
les outils récepteurs (2, 3) de même type de chaque paire d'outils (A...E), les deux postes d'échange (6.1, 6.2) entre ainsi que les postes de chargement et d'usinage (7, 5) se font chaque fois diamétralement face par rapport à l'axe de la table rotative (DR).

5. Système de fabrication selon la revendication 4,
**caractérisé en ce que**
la table rotative (1) est occupée par deux paires d'outils (A, B) décalées l'une par rapport à l'autre à angle droit par rapport aux diagonales de la table rotative et les postes de changement (6.1, 6.2) sont également décalés angulairement de 90° par rapport au poste de chargement et au poste d'usinage (7, 5).

6. Système de fabrication selon l'une des revendications 2 à 5,
**caractérisé en ce que**
les deux postes de changement (6.1, 6.2) comportent chacun un magasin d'outils (8.1, 8.2) et pour chaque paire d'outils stockée (C, D, E), l'un des outils récepteurs (2 ou 3) est en réserve dans l'un des magasins d'outils et l'autre de même type (3 ou 2) est en réserve dans l'autre magasin d'outils.

7. Système de fabrication selon la revendication 6,
**caractérisé en ce que**
les magasins d'outils (8.1, 8.2) sont des tables tournantes avec des emplacements de stockage d'outils répartis en périphérie.

8. Système de fabrication selon l'une des revendications 6 ou 7,
**caractérisé par**
un convoyeur linéaire (10) pour transférer les outils récepteurs (2, 3) entre les magasins d'outils (8.1, 8.2) et le chemin de circulation.

9. Système de fabrication selon la revendication 6 ou 7,
**caractérisé en ce qu'**
un robot transporteur (15) est prévu pour transférer les outils récepteurs (2, 3) entre le magasin d'outils (8.1, 8.2) et le chemin de circulation.
